(19) Europäisches Patentamt
European Patent Office
Office européen des brevets

(11) **EP 3 336 996 B1**

(12) **EUROPEAN PATENT SPECIFICATION**

(45) Date of publication and mention
of the grant of the patent:
**05.01.2022 Bulletin 2022/01**

(51) Int Cl.:
*H02J 3/00* *(2006.01)*     *H02J 3/06* *(2006.01)*
*G06Q 10/06* *(2012.01)*     *G06Q 50/06* *(2012.01)*

(21) Application number: **16306723.4**

(22) Date of filing: **19.12.2016**

(54) **DISTINCTION OF ENERGY SOURCES**

UNTERSCHEIDUNG VON ENERGIEQUELLEN

DISTINCTION DE SOURCES D'ÉNERGIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.06.2018 Bulletin 2018/25**

(60) Divisional application:
**17205601.2 / 3 336 997**

(73) Proprietor: **Electricité de France**
**75008 Paris (FR)**

(72) Inventors:
• **LUCIDARME, Thierry**
**78180 Chevreuse (FR)**

• **DHERBECOURT, Yves**
**92340 Bourg la Reine (FR)**
• **LAWRENSON, Matthew John**
**1015 Lausanne (CH)**
• **NOLAN, Julian Charles**
**1015 Lausanne (CH)**

(74) Representative: **Plasseraud IP**
**66, rue de la Chaussée d'Antin**
**75440 Paris Cedex 09 (FR)**

(56) References cited:
WO-A2-03/023675     US-A1- 2010 217 452
US-A1- 2011 231 028     US-A1- 2012 150 359
US-A1- 2012 150 679

**Description**

Distinction of energy sources

The invention pertains to the technical field of the energy distribution. More specifically, the invention is related to the driving of the electrical energy from a plurality of suppliers to a plurality of consumers through a large electrical grid. WO 03/023675, US 2010/0217452 and US 2011/231028 discuss such a subject.

Electrical energy is an uncommon product: it cannot be easily stored and it requires a continuous and dedicated distribution network. To adapt the generation of energy in function of the energy demand in real time is difficult and expensive. As a consequence, it is known to dynamically drive the electrical grid in order to redirecting any overload energy generation toward the delivery points requiring energy. Such a driving as to be made on a very large grid to be efficient. As an example, the imbalance between generation and consumption of electricity in France is occasionally compensated via connections with foreign countries electrical grids. Such connections are used to exchange energy. The technical key parameter of each electrical grid driving action is the quantity of energy provided and consumed at each time.

As a consequence, the single relevant parameter for the energy driving is the quantity produced and consumed at each time. The single relevant criterion for the final consumer is the guarantee to obtain the required quantity of electrical energy at each time. Finally, the ecological aspect of the electrical energy production, distribution and consumption can be managed only by artificial and political decisions collectively imposed to everyone, for example by laws and taxes. A consumer cannot have personal choice in order to promote a type of energy by its own consumption.

A technical means enabling to each consumer to select the quality of the energy he is consuming does not exist.

The invention improves the situation.

The applicant proposes a method to distribute energy to delivery points of an energy supplying grid according to independent claim 1.

Such a method enables to distribute selected quantities of energy from distinct and identified sources to each consumer in function of known qualities parameters of the sources. The consumers can precisely know, and select in consequence, the quality of the source of energy that he wishes to use. The effective providing of the energy to each consumer can be adapted in function of the consumer wishes and the availability of the requested quality of energy. The energy supplier of a type of energy that is more expensive to produce could use the demands of customers as a parameter to adapt its prices in function of the quality of energy that he produces.

In a second aspect of the invention, the applicant proposes a system comprising a managing unit. The managing unit comprises a central server and an energy ledger. The managing unit is configured to implement the above method.

In a third aspect of the invention, the applicant proposes a non-transitory computer-readable storage medium comprising a program product stored thereon and executable by a processor in the form of a software agent including at least one software module comprising instructions to implement a method according the above.

Other features, details and advantages will be shown in the following detailed description and on the figures, on which:

- Figure 1 shows an energy distribution system according to the invention, and
- Figure 2 is a diagram of operations implemented in a method according to the invention.

Figures and the following detailed description contain, essentially, some exact elements. They can be used to enhance understanding the invention and, also, to define the invention if necessary.

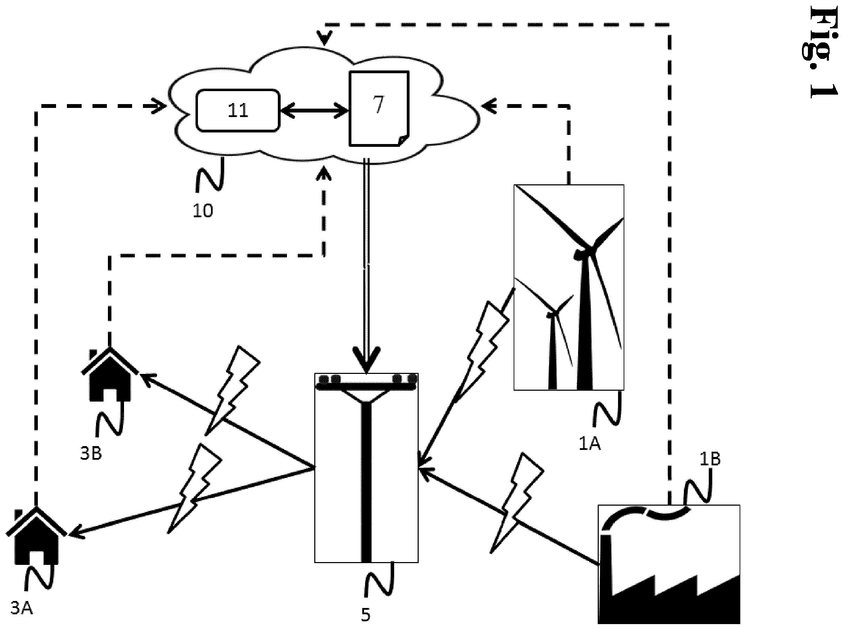

Figure 1 shows a simplified example of a system comprising a plurality of energy supply units 1A, 1B and a plurality of consumers 3A, 3B electrically linked one to the others through a grid 5.

In the example, each energy supply unit 1A, 1B is an entity comprising a plant that generates energy. The first energy supply unit 1A comprises a group of wind turbines having a common connection to the grid 5. The second energy supply unit 1B comprises a coal thermal power station. Each consumer 3A, 3B, or customer, is an entity comprising at least one delivery point on the grid 5 to consume electrical energy. The first consumer 3A comprises a home of a family. The second consumer 3B comprises an industrial site. In the example, each consumer 3A, 3B corresponds to an identified delivery point associated with an identified electricity supply agreement.

In other embodiments, a consumer 3 can correspond to a group of many people having a common point of delivery on the grid 5. For example, the homes of a city can be considered as a single entity and a single consumer 3.

In some embodiments, a physical point of the grid 5 can corresponds both to an energy supply unit 1 and to a consumer 3. People and businesses have an opportunity to generate energy at home. They may choose to invest in various apparatus such as solar panels, or home windmills in order to generate energy. The motivation to do this might be to support environmental convictions, to provide a secure source of energy, or to produce energy that can be sold for profit. Home energy storage units are now also available, allowing users to time when surplus energy can be sold on the grid 5, thus providing additional flexibility. A storage unit 1 is successively equivalent to an energy supply unit 1 and to a consumer 3. Whatever the reason, with the correct equipment, individual suppliers can provide energy to the grid 5. In the following, an energy supply unit 1 and a consumer 3 are considered as two distinct entities, even if they can be linked to the grid 5 via the same connection and be managed by a common physical entity.

The system comprises a managing unit 10 to collect data from the energy supply units 1 and from the consumers 3A, 3B. The managing unit 10 includes an energy ledger 7. For example, the energy ledger 7 is a database hosted on data storage means and managed by a central server 11.

The system also implements an algorithm. In an embodiment, the algorithm arbitrates between the current supply and demand, and where supply of the energy type/location stipulated by the customer is not fully possible, energy from other supply types/locations is used in order to meet the required quantity of demand.

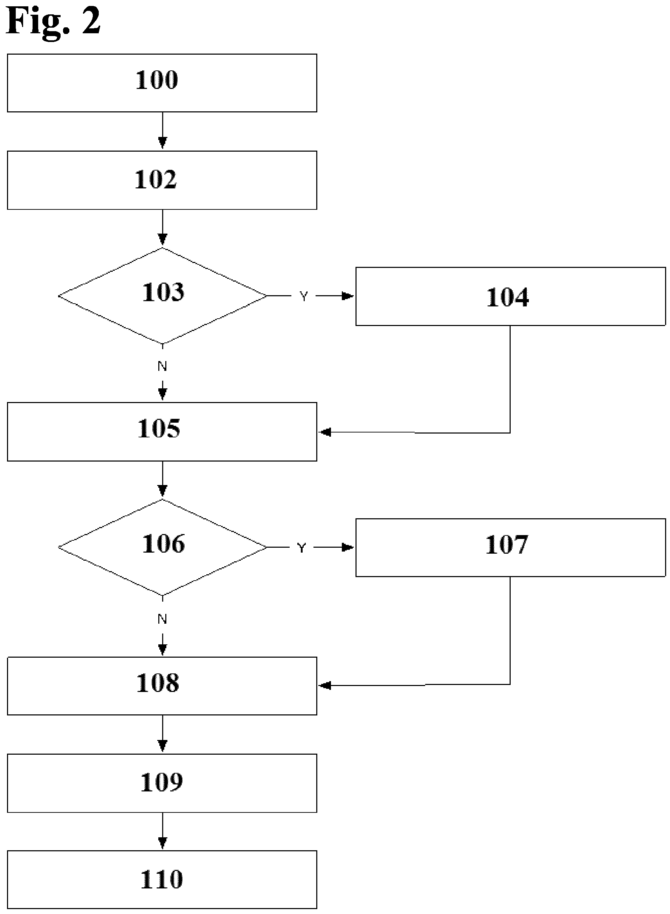

A method to distribute energy will be now described with reference to figure 2.

In a first operation 100, energy demands data are collected from each one of the consumers 3A, 3B. The energy ledger 7 is updated with the collected data, here via the manager unit 10. In an embodiment, each energy demand contains at least two criteria:

- a required quantity,
- a set of customer stipulations, or requirements,
  and, optionally,
- a description of what usage is to be governed by the energy demand.

A required quantity is a description of the quantity of energy required. For example, the required quantity can contains a net amount of energy, for example expressed in kWh or as proportions of energy used by a customer. In other examples, the required quantity might be abstracted to an entity, such as a particular device (e.g. a television) or person (e.g. a member of a household). An actual amount of energy can be estimated that is likely used by that entity, for example based on historic usage, or an amount based on the likely proportion of the customer's total energy usage that can be attributed to that entity. An amount of energy or the required quantity may be based on actual measurements, for example based on readings from an apparatus within a device, or based on wearable sensors worn by specific people. For instance, the switching on of an appliance may be detected and recorded by a local triggering action through a wearable device.

A set of customer stipulations is requirements the customer places on the energy to be delivered. In the present description, the customer stipulation data defines "qualities of the electrical energy" sought by the consumers. The word "quality" has, here, a general meaning about the source of the energy, including generation and transportation of the energy. Here, the words "qualities of the electrical energy" has not to be understood as physical parameters that can be measured on an electrical line like the form of the voltage wave.

The customer stipulations data of the invention contains at least parameters related to a position on the grid of the energy supply units or geographical parameters of the energy generation and may contain at least one of the following information:

- energy generation type parameters,
- a parameter indicating whether the energy supplies can be delayed or not,
- a price the user is willing to pay for the energy,
- a specific energy supplier.

The "energy generation type" parameters can be used by the consumer to select a single or a restricted number of types of energy generation. For example, the type of energy generation can be defined with respect to the source of the electrical generation: solar energy, wind energy, marine energy, nuclear energy, hydroelectricity, fossil-fuel energy, etc. The selection of the criteria can be made in function of ecological aspect by labelling (or classifying) each source as a "green energy" or a "non-green energy". The classification can be set by default and/or be customized by the customer himself.

Green energy can loosely be defined as energy that has been produced using renewable methods. The use of green energy remains a key desire for many people concerned about the environment, and also security of energy supply. Green energy remains an important market for many energy suppliers, as can be seen with recent announcements of organization changes to allow established energy suppliers manage a more diverse range of energy production.

The "geographical" parameter of the energy generation can be used by the consumer to select local electric generation. For example, the criterion can be a "maximum transport distance", which means a maximum distance between the connection point on the grid 5 of the energy supply units 1A, 1B and the delivering point on the grid 5 of the consumers 3A, 3B.

Thus, only energy provider located in an area centered on the delivery point can be selected by each customer.

The criterion can also be a specific predefined territory, like a country. Such a criterion enables a consumer to promote specific energy providers, for example for social aspects reasons. Consumers can decide to purchase energy produced and provided by local suppliers. This also enables to promote a "shared economy" where suppliers of energy, including small or independent suppliers, communicate with their customers in a more direct and transparent manner than usual.

The parameters of a "position on the grid 5 of the energy generation" can be formulated like a calculated metrics that reflect the complexity and distance involved in supplying the energy. For example, an "electro-technical distance" could be devised that counts the number of transformers between energy supply units 1A, 1B and the delivery point of the consumers 3A, 3B. The transformers can be seen as nodes on the grid 5. The type of transformers passed can also be taken into account. Such parameters better reflects the physical costs to transport energy than the purely "geographical" parameters.

For example, the grid 5 can be divided into three types of interconnected sub-grids:

- big transportation sub-grids ("Haute tension B" or "HTB" in French; at 400 kV or 225 kV);
- repartition sub-grids ("Haute tension A" or "HTA" in French; at 225 kV, 90 kV or 63 kV);
- distribution sub-grids ("Basse tension" or "BT" in French; at 220 V or 400 V).

Each transformer between energy supply units 1A, 1B and the delivery point of the consumers 3A, 3B could have virtual "value" or a "weight" depending on its type to define an "electro-technical distance". Each transformer is associated to a weighted factor according to the transformer type or size to establish a calculated metrics. For example:

- W(BT) = 1 for each BT transformer on a distribution sub-grid;
- W(HTA) = 2 for each HTA transformer on a repartition sub-grid, including the HTA/BT transformers between a repartition sub-grid and a distribution sub-grid;
- W(HTB) = 4 for each HTB transformer on a big transportation sub-grid, including the HTB/HTA transformers between a big transportation sub-grid and a repartition sub-grid;
- "nb nodes" being the total encountered number of transformers from source to destination.

The "electro-technical distance" could be expressed as a "proximity index", as follow for example:

$$\cfrac{1}{\dfrac{\sum_{BT\,nodes}\times W(BT)}{nb\ nodes}+\dfrac{\sum_{HTA\,nodes}\times W(HTA)}{nb\ nodes}+\dfrac{\sum_{HBT\,nodes}\times W(HBT)}{nb\ nodes}}$$

The proximity index is comprised between 0 and 1. The closer to 1 the proximity index is, the more "local" the source is and the lower the "electro-technical distance" is. The higher the BT transformers part compared to other transformers is, the closer to "1" the index is. A customer can, for example, require to exceeding a minimum value of the proximity index in order to reduce the "electro-technical distance". Such criteria have an economical aspect and an ecological aspect because more the distance of transportation of the electrical energy is long, more the voltage is modified, and less the ratio of the energy really available at the end on the energy initially produced at the beginning is low.

The "geographical" parameter and/or the parameters of a "position on the grid of the energy generation" can be used by the customer to promote electricity locally produced to demand. This can lead to reduced transmission line losses and also transmission infrastructure, and therefore lower costs.

The parameter indicating whether the energy supplies can be delayed or not can be formulated as a distribution between the delayable and non-delayable energy that the consumer is ready to accept. For example, a consumer can estimate that a maximum of X% of the total energy that he needs can be delayed. The delayable energy can be used in order to avoid energy consumption during critical periods of imbalance between the total electrical energy needs and the total energy available, for example during the evening of the colder days of a year and/or when some energy supply units are unavailable due to maintenance operations or weather conditions. For example, the consumer can accept that its inessential devices are temporarily switched off during such critical periods. Such actions are known as an action of a "Load management".

The "price" parameter can be formulated as a maximum price for a quantity of electrical energy, for example a maximum price for generating and distributing 1 kWh of electricity. The consumer can select a maximum price that he is ready to pay to obtain electrical energy.

A customer can select a specific energy supplier for any reason, for example because he has specific information about a specific energy supplier or because he trusts this specific energy supplier.

The above parameters are only examples of customer stipulations data. The said parameters can be combined by the consumer in order to precisely indicate which quality of electrical energy he wishes. For example, a consumer can decide to promote "green energy" while indicating a maximum price that he is ready to pay. Even if some "green energies" are technically more expansive to generate and/or to distribute, a consumer can decide to promote the green energies by its consumption with costs limitations.

In the examples, a set of customer stipulations is provided by the consumer 3A via an online account and a website. The customer stipulations data can be associated to usual data required to identify consumer in an electricity supply agreement, for example a personal identification number, names, postal address, delivery point identification number, e-mail, bank account, etc. At least some of the stipulations data can be automatically collected via specific devices connected to the managing unit 1, like domestic electric meters. In such a case, a machine-to-machine communication (M2M) could be used thanks to a set of apparatus and protocols that allows machines to communicate directly. It is a low cost method to allow remote apparatus to communicate with a network to provide monitoring data. In fact, some data like the total energy needing (in kWh) and/or consumption models in function of the time could be automatically calculated from data collected via specific and known devices like connected domestic electric meters. The energy demands are transmitted from the customer 3 to the system via a network different from the grid 5 for supplying energy.

At least a part of the required quantities and the customer stipulations data can be provided in advance, before the real needing, in order to predict the future needing. The customer stipulations can be modified later, by the customer himself and/or in function of automatically collected data. The customer stipulations can also be adapted in real-time for the current needing. The required quantities and the customer stipulations data may be established in a temporal fashion, i.e. future energy requirements added, and then these requirements become "current" at the time of use.

The required quantities can include an estimation of a future amount of energy, (established in advance), and/or an amount of energy required in real-time (deducted from a real consumption).

The requirement data can have default setting in absence of voluntary providing from the consumer.

When the energy demands contain a description of what usage is to be governed by the energy demand, such a description may include, for example:

- the total energy used by a customer;
- the energy used by a specific device;
- the energy used by a specific person within the customer location;
- the energy used whilst undertaking a specific activity.

Where the energy usage is related to a specific device, person or specific activity then additional apparatus is likely to be required in order to map the energy usage to that entity. Examples of such apparatus include:

- devices: apparatus that connects between a device and wall socket that can communicate to the system (for example via M2M apparatus and protocols) to provide details of energy usage;
- people: wearable devices, and/or authentication devices able to identify when a certain person uses apparatus that can consume energy;
- activities: wearable sensors and other sensors able to detect when a person or group of people undertake a certain activity. An example might be a camera paired with image processing algorithms able to detect the performance of activities.

In some embodiments, where the energy usage is associated with a person or activity the customer's location may be varied, and in fact be the location of the person at the time they use the energy, or the location at which an activity takes place. Such locations would be determined by sensors, for example wearable sensors worn by the relevant person, or the people participating in the activity. A specific type of energy can be allocated to devices located close the person.

For each consumer 3, the customer stipulations data is combined with required quantities data to establish an energy demand. A "required quantity" can include for example:

- a net amount of energy (for example expressed in kWh),
- a proportion of energy used by a customer (for example X% of the total energy used).

For a defined period of time, a customer can provide a set of a plurality of energy demands. For example:

- X % of the total quantity being "Green energy" cheaper than x € by kWh, and
- (100-X) % of the total quantity being "Nuclear energy" cheaper than y € by kWh.

In the following, an energy that has been created and supplied in a manner that meets the customer stipulation of an energy demand is a "qualifying energy". For example if the customer stipulation is that the energy is created through the conversion of wind to electricity, and the creation is performed within 20 km of the customer's location, then qualifying energy is energy that can be produced to these requirements. A "qualifying energy supplier" is an energy supplier that supplies energy that meets the criteria laid out in the energy demand (i.e. qualifying energy).

Specification data are collected from each one of the energy supply units 1A, 1B. The customer stipulation collection 100 and the specification data collection 101 are independent. For example, the specification data are provided by the energy supply unit 1A and checked by an independent actor to certify the validity of the specification data. The specification data of the present invention contains at least parameters related to a position on the grid of the energy supply units or geographical parameters of the energy generation and may contain at least one of the following information:

- an identifier,
- energy generation type parameters,
- a parameter indicating whether the energy supplies can be delayed or not, for example if the energy supply unit 1A, 1B are associated to storage means like batteries,
- a price the energy supplier is willing to be paid for,
- a quantity of energy provided to the grid 5 in function of time.

The information contained in the specification data are selected in order to be comparable to the information contained in the customer stipulation data.

The information about the quantity of energy provided to the grid 5 in function of time can contain:

- estimations for the future established in function of technical parameters of each energy supply unit;
- estimations for the future deducted from models. For example, correlation can be established between the energy supply unit and various weather types (sun, wind, etc.). Thus by monitoring weather conditions an estimation can be made as to the probably correctness of any reported level of energy generation of a specific energy supply unit;
- measures in real-time of the real quantity of energy provided by each energy supply unit;
- a combination of the above information, for example estimations corrected in real-time with measures.

In some embodiments, the energy supply units 1A, 1B are connected to the grid 5 via a validation apparatus, including a measuring device. The measuring device is able to measure the quantities of electrical energy really provided to the grid 5 by each supply unit 1A, 1B. For example, such a validation apparatus can comprise a multi-flow/multi-entry smart meter able to precisely measure the injected current of each of several local energy supply units 1, including different energy generation types (photovoltaic panels, wind turbines, etc.) and/or multiple sources of each energy generation type. Then, the validation apparatus report the measures to the manager unit 10. In another words, a single validation apparatus can be associated to a plurality of energy supply units 1 while ensuring distinct measurements. In addition, the validation apparatus is able to validate that the energy has been supplied by a specific energy supply unit.

The validation apparatus is attached to the energy supply unit following an inspection made to ensure that the equipment meets the standards required to supply qualifying energy. Preferably, the validation apparatus is attached in such a way that a tampering of the apparatus is evident. Moreover, the used hardware is tampered-proof. As energy is generated and supplied to the grid 5, the validation apparatus communicates with the managing unit 10 to inform the system of the amount of energy being produced. As the validation apparatus is specific to a certain energy supply unit 1A, 1B, the amount of production of this energy supply unit 1A, 1B is known. The energy ledger 7 can be updated accordingly.

In said embodiments, the measuring devices of the validation apparatus are adapted to distinguish measurement for each energy supply units 1 having different specification data. The said adapted measuring devices form validation apparatus. They are used to certify both qualities and quantities of the energy provided by each energy supplier unit 1 on the grid 5.

Such architecture is highly scalable. A validation apparatus may located and operated at the level of a building, a group of flats, a "block" of houses, a street, a specific city area, a whole city or a region. The validation operator may also be any trustable actor of private or public collectivities which have been given an authority with respect for instance to the laws: electricity producer, distributor or vendor, real estate manager, city department, co-property syndicate, or any specific certified and trustable third party.

Such communication from the validation apparatus to the managing unit 10 may be made, for example, by using transmission line coding, or M2M communications apparatus and protocols or via sending a coded signal over the electric transmission lines being used to deliver the energy. Moreover, wireless M2M communications can be used, for example based on the 5G technology.

In a step 102, the manager unit 10 assesses the energy ledger 7. For example, the energy ledger 7 holds a record of:

- the "current energy demands", being the portion of the energy demands that require energy to be delivered at the current time;

- the "current energy additions", being the energy currently being supplied to the grid 5 by the energy supply units 1;

- the "allocated energy subtraction", being energy that is allocated to a certain current energy demand;

- the "allocated energy additions" being supplied energy that is allocated to meet a certain current energy demand.

An example of an energy ledger 7 is provided on the following tables:

| Current Energy demand | | | | | |
|---|---|---|---|---|---|
| Customer | Location | Max distance | Qty. Type A | Qty. Type B | Qty. Type C |
| C1 | Latitude, Longitude | 20 km | 10 kW | 10 kW | 0 kW |

| Allocated Energy Subtractions | | | | |
|---|---|---|---|---|
| Supplier | Distance | Qty. Type A | Qty. Type B | Qty. Type C |
| S1 | 12 km | 10 kW | 0 kW | 0 kW |
| S2 | 16 km | 5 kW | 10 kW | 0 kW |
| S3 | 24 km | 5 kW | 10 kW | 0 kW |

| Current energy Additions | | | | |
|---|---|---|---|---|
| Supplier | Location | Qty. Type A | Qty. Type B | Qty. Type C |
| S1 | Latitude, Longitude | Qty. Type A | Qty. Type B | Qty. Type C |

| Allocated Energy Additions | | | | |
|---|---|---|---|---|
| Customer | Location | Qty. Type A | Qty. Type B | Qty. Type C |
| C1 | Location | 10 kW | 0 kW | 0 kW |
| C2 | Location | 30 kW | 5 kW | 10 kW |
| C3 | Location | 40 kW | 7 kW | 20 kW |

Then, an "allocating step" is implemented by the managing unit 10, wherein algorithm:

- calculates the current energy demand;
- calculates the current energy additions;
- allocates the current energy additions to customers by comparing each energy demand to each specification data of each energy supply unit 1.

In a first example, an initial allocation algorithm is applied to the energy ledger 7. The purpose of this algorithm is to ascertain whether supply can meet demand, and if so match current demand with current supply.
The general process for the initial allocation algorithm is as follows:
For each unit of energy required as part of an energy demand:

i) a unit of energy from a qualifying energy supplier, that meets the criteria to be qualifying energy, is given the value "allocated energy addition". As this is energy from a Qualifying Energy Supplier it is verifying the required stipulations of the demander.

ii) a same unit of energy is also given the value "allocated energy subtraction".
iii) thus, full traceability of the unit is established, i.e. the provenance of each unit of energy is known.
iv) this is repeated until either

(i) all the energy required by current energy demands is met, or

(ii) the managing system 10 determines that the current energy additions are not sufficient to cover all current energy demands.

The initial allocation algorithm may apply a strategy in order to allocate supply to demand, examples of such strategies include:

- the minimization of total energy supply unit 1 - consumer 3 distance;
- allocation according to the time of registration of each energy demand;
- where the managing system 10 determines that the current energy additions are not sufficient to cover all current energy demands, the managing system 10 applies an arbitration operation.

In an operation 103, the managing unit 10 checks if the current energy demands exceed current energy additions. If yes, an allocation arbitration operation 104 is implemented.

An example of allocation arbitration operation 104 is as follows:

- the current energy additions are distributed in accordance to the initial allocation algorithm and any associated strategies.
- where a deficit of qualifying energy exists the energy demand is met using non-qualifying energy (i.e. energy from sources and locations that do not meet the customer stipulation).

In a second example a prediction method might be applied to assess likely discrepancies between current energy supply and current energy demand. Using this data, an arbitration operation may be devised along the following lines:

- a potential discrepancy between current energy supply and current energy demand is identified;
- depending on the size of this discrepancy the price offered to energy suppliers for qualifying energy is increased;
- energy suppliers are then contracted to supply the energy at the future time.

An auction system may be employed whereby energy suppliers bid for right to supply qualifying energy, with the cost of the energy being set by market prices.
An auction system may be used where customers are asked for a maximum price they will tolerate in order for the energy consumed to be qualifying energy. This when supply does not meet demand at a certain energy price the price is increased until the demand for qualifying energy decreased to the same level as supply.
In a further example, another allocation operation will be described.
The assumptions made for this operation are:

- the allocator (i.e. the managing unit 10) can be located anywhere in the network in a centralized place or in a distributed way. As stated above, the managing unit can for instance be located at some HTA/BT transformers between a repartition sub-grid and a distribution sub-grid, or above.
- the allocation may apply to only some sections of the grid 5, for example in non-critical part of the grid 5 and not over its whole coverage.
- several type of energy supply are available, to simplify the worked example only two kinds of energy have been used ("G"=green energy and "N" = Not green energy, so example coal-based energy). However, the example can be extended to an arbitrarily large number of energy types.
- multiple "classes" can be defined, where a class is a subscription allocation defined on the priority of the user, which may in turn be based on the amount the customer is willing to pay for a certain type of energy. For the worked example below 3 classes of Green Energy ($G_1$, $G_2$ and $G_3$) and a single class of Non-green energy ($N_1$) are considered.
- the customer may state other requirements, such as the energy provision is "delayable" or "non-delayable".
- also priorities may be placed on each energy demand, thus the total amount of energy demands can be ranked.
- each energy type has a maximum capacity, in the worked example below the maximum capacity of the G type of energy is $G_{max}$.

- an allocator "$M_k$" is assigned to each class, where k indicates the class (so $MG_2$ refers to the allocator for the class $G_2$). $M_k$ is a number where $1 > M_1 > M_2 > ...M_k... > M_N = 0$.
- a buffer "B" is kept in order to provide the flexibility to meet fluctuations in demand.
- the units are considered to be a unit of energy, for example kWh.

A worked example:
Assuming 3 classes of green energy, $G_1$, $G_2$ and $G_3$, with $G_1$ having the highest priority and $G_3$ the lowest, and a single class of non-green energy $N_1$.

$M_{G1} = 0$; $M_{G2} = 0.25$; $M_{G3} = 0.5$
$G_{max} = 100$
$B = 0$

Scenario 1:
Demand for $DG_1 = 40$, $DG_2 = 40$, $DG_3 = 5$
Thus, the energy demanded is less than ($G_{max}$ - B) and energy is supplied as requested.
Scenario 2:
Demand for $DG_1 = 40$, $DG_2 = 40$, $DG_3 = 40$
Thus, the energy demanded is greater than ($G_{max}$ - B), hence the allocator is used to reduce the energy demands for each class in accordance with:

Energy supplied to class $G_1 = DG'_1 = (1-M_1).DG_1 = 40$
Energy supplied to class $G_2 = DG'_2 = (1-M_2).DG_2 = 30$
Energy supplied to class $G_3 = DG'_3 = (1-M_3).DG_3 = 20$

Hence the total supplied energy is $\sum_{k=1}^{N} DGk = 90$. This is less than ($G_{max}$ - B). This amount of energy is supplied. The remaining energy is supplied by energy class N, i.e. $\sum_{k=1}^{N} DGk - \sum_{k=1}^{N} DG'k = 10$.

Scenario 3:
Demand for $DG_1 = 50$, $DG_2 = 50$, $DG_3 = 40$
Thus the energy demanded is greater than ($G_{max}$ - B), hence the allocator is used to reduce the energy demands for each class in accordance with:

Energy supplied to class $G_1 = DG'_1 = (1-M_1).DG_1 = 50$
Energy supplied to class $G_2 = DG'_2 = (1-M_2).DG_2 = 37.5$
Energy supplied to class $G_3 = DG'_3 = (1-M_3).DG_3 = 20$

Hence the total supplied energy to class G is $\sum_{k=1}^{N} DGk = 107.5$, which is still greater than ($G_{max}$ - B), and the energy to be supplied to class N is demand DG - demand DG' = 140 - 107.5 = 32.5. As the total energy calculated to be supplied to class G still larger than $G_{max}$, hence an additional restriction is uniformly placed on each class to bring the total supplied energy to be ($G_{max}$ - B). This restriction factor is defined as $\alpha$, where $\alpha$ = ($G_{max}$-B)/(sum of DG for all classes).
The purpose of $\alpha$ is, in the case where the actual amount of energy that can be delivered is less than the proposed total supplied energy (i.e. before the $\alpha$ restriction is applied), i.e. it is greater than (Gmax - B), and then the actual amount of total supplied energy is reduced to be equal to be (Gmax - B).
In this case:

The initial total amount of requested energy = 140
After the allocation factor M is applied G = 107.5, N = 32.5
Then $\alpha$ is applied as:

$$\alpha = (G_{max}\text{-}B)/(DG_1 + DG_2 + DG_3)$$

Energy supplied to class $G_1 = DG''_1 = (1-M_1).DG_1.\alpha = 42$

Energy supplied to class $G_2$ = DG"$_2$ = (1-$M_2$).$DG_2$.$\alpha$ =31
Energy supplied to class $G_3$ = DG"$_3$ = (1-$M_3$).$DG_3$-$\alpha$ = 17

Hence 90 units are supplied as energy type G, and 50 units are supplied as energy type N (being 32.5 calculated from the application of the M allocation factor and 7.5 units from the application of the $\alpha$ restriction).

In the embodiment where energy is marked as being "delayable", it does not enter the allocation process until either

(i) there is sufficient capacity to supply it, or
(ii) the end of a stated "delay" period has been reached.

After the allocation arbitration operation 104, or directly after the operation 103 if the current energy demands do not exceed current energy additions, the energy equal to the final allocated energy addition is provided to the grid 5 by the energy supply units 1 in an operation 105.

In an operation 106, a check is made: are any energy suppliers qualifying energy suppliers? If yes, for qualifying energy suppliers, the supply of qualifying energy is validated by the relevant energy supply unit's validation apparatus in an operation 107.

After the validation operation 107, or directly after the check operation 106 if there is no qualifying energy supplier, energy equal to the amount customer allocated energy is supplied to the customer in an operation 108.

In an operation 109, the energy ledger 7 is adjusted (updated) to reflect the change due to supplied energy.

In an operation 110, an energy supply summary is compiled and made available to each customer.

The energy supply summary is a report providing details of the supplied energy, and a comparison of this to the energy requested in the energy demand. Examples of the information that might be present in an energy supply summary include:

- the energy suppliers who contributed energy to the customer.
- the cumulative total distance of the distance between the energy suppliers and customer for the units of energy;
- the percentage of energy that was supplied that was qualifying energy.

The energy supply summary should be in a format that can be distributed, read and understood by the customer. Examples might be a printed or electronic document, a file that is sent to the customer or a web page that can be read by the customer.

The customers can be reassured that the energy supplier they chose to deal with is really supplying a corresponding energy in the stipulated manner. The system enables each customer to supporting local generation of energy. Local producers of certain types of energy can provide energy at a differentiated price. The supplier of a type of energy that is more expensive to produce can achieve a higher price. The system provides various methods to arbitrate between the demand and supply of energy, for example using auction like methods. Using such methods may allow the suppliers of energy that is more expensive to produce, yet more desired by customers, to provide this energy at a premium price compared to other types of energy.

A main embodiment is applicable to a situation where:

- Customers provide details of their energy requirements, such as what type of energy generation should be used, whether the energy generation should be "local", etc.
- A set of energy suppliers provide energy to the grid.
- An algorithm arbitrates between the current supply and demand, and where supply of the energy type/location stipulated by the customer is not fully possible, energy from other supply types/locations is used in order to meet the required quantity of demand.

In a variant, compatible with any embodiments previously described, the allocation arbitration operation to allocate quantities of current energy supplied by energy supply units is based at least in part on real time data. For example, the managing unit receives input data from:

- real time database of requirements data from customers,
- real time database of constraints of each requirement (price, distance, usage, type of provider, time of consumer, time of registration, delayable, not delayable, etc.), and/or
- real time database of available amount of certified energy of each types from each energy supply unit.

Optionally, the allocation arbitration operation can be made in function of a "priority level" $P_k$ associated to each

customer. For each customer, the priority level $P_k$ can depends on its commercial agreements. For example, there are three levels $P_1$, $P_2$ and $P_3$ of priority. The group of customers having the highest priority level $P_1$, corresponding to "Gold customers", have priority over all other customers. The group of customers having the second highest priority level $P_2$, corresponding to "Silver customer", have priority over customers of $P_3$ level and the other customers of $P_3$ level, corresponding to "Bronze customer", have no priority. When the total energy demand for a class of energy (for example Green energy) is greater than the available energy of the said class supplied by energy supply units 1, then the available energy is allocated firstly to the customers of the highest level of priority $P_1$. After that, if there is any available energy, it is allocated secondly to the customers of the second highest level of priority $P_2$, and so on. The "priority level" $P_k$ can be chosen by each customer, for example during a subscribing to the service and/or in function of a price to pay.

Optionally, the allocation arbitration operation can be made in function of the feature delayable or non-delayable or the energy demand. When the collected requirement data indicate that an energy demand is delayable, then the corresponding demand can be temporarily considered having a priority level $P_k$ reduced to $P_{k-1}$ or $P_{k-2}$. In another words, the available energy is allocated firstly to the non-delayable demands.

Optionally, the allocation arbitration operation can be made in function of a feature about the "electro-technical distance", for example based on the "proximity index" described above. When there is insufficient energy available for a class of energy (for example Green energy) to satisfy a plurality of energy demands, then the available energy is allocated firstly to the demands for which the electro-technical distance is the lowest.

The allocation arbitration can take into account many criteria, and many combinations of criteria mutually ordered with a set of rules. The allocation arbitration can take into account at least the above described criteria:

-    a priority level $P_k$ associated to each customer,
-    a delayable or non-delayable energy demand,
-    a distance or an electro-technical distance between the supply unit and the consumer, or
-    an ordered combination of such criteria.

The system enables to apply the rule of supply and demand to the energy supplying. Then, the price of energy can be finally depends on the availability of each "quality of energy" on the grid in function of time. The prices can be dependent, at least in part, of the cost to delivering it. The differentiated prices can be made available on a public access. The price really paid by the consumer is not necessarily equivalent to the price to which the supplier sold the energy because of intermediate actors and/or taxes.

## Claims

1.    Method to distribute energy to delivery points of an energy supplying grid (5) comprising:

a) collecting energy demands from each one of a plurality of consumers (3) connected to an energy supplying grid (5), the energy demands including requirements data,
b) collecting specification data of the origin of the energy supplied by each one of a plurality of energy supply units (1) connected to said energy supplying grid (5),
c) keeping up to date an energy ledger (7) with

- quantities of energy consumed by each consumer (3),
- quantities of energy supplied by each energy supply unit (5),
- the collected requirement data, and
- the collected specification data,

d) allocating quantities of current energy supplied by energy supply units (1) to the energy demands of the consumers (3) in function of the updated energy ledger (7),
e) distributing the energy provided by the energy supply units (1) to the consumers (3) through the energy supplying grid (5) and according to the allocated quantities,

**characterized in that** the requirements data contains parameters related to a position on the grid (5) of the energy supply units (1) or geographical parameters of the energy generation.

2.    Method according to claim 1, wherein the requirements data contains at least one parameter among:

- energy generation type parameters,

- geographical parameters of the energy generation,
- parameters of a position on the grid (5) of the energy generation,
- a parameter indicating whether the energy supplies can be delayed or not,
- a price the user is willing to pay for the energy,
- a specific energy supplier.

3. Method according to any of the preceding claims, wherein the requirements data further contains a description of what usage is to be governed by the energy demand.

4. Method according to any of the preceding claims, wherein the requirements data contains parameters related to a position on the grid (5) of the energy supply units (1) including a calculated metrics established by counting a number of transformers on the part of the grid (5) linking an energy supply unit (1) and a delivery point of the consumer (3).

5. Method according to claim 4, wherein each transformer on the part of the grid (5) linking an energy supply unit (1) and a delivery point of the consumer (3) is associated to a weighted factor according to the transformer type or size to establish the calculated metrics.

6. Method according to any of the preceding claims, wherein the collecting specification data of the origin of the energy supplied by each one of a plurality of energy supply units (1) connected to said energy supplying grid (5) is made via respective validation apparatus arranged to certify a quantity of energy provided by the corresponding energy supply unit (1) to the grid (5).

7. Method according to claim 6, wherein each validation apparatus includes a measuring device able to measure the quantities of electrical energy really provided to the grid (5) by each supply unit (1), the validation apparatus being arranged to certify a quantity of energy according to the quantities measured by said measuring device.

8. Method according to claim 7, wherein the measuring device is a multi-flow / multi-entries meter allowing to count different flows of produced energy.

9. Method according to any of the preceding claims, wherein the allocating of quantities of current energy comprises:

   - calculates a current energy demand;
   - calculates a current energy additions;
   - allocates the current energy additions to consumer (3) by comparing each energy demand to each specification data of each energy supply unit (1).

10. Method according to any of the preceding claims, wherein the allocating of quantities of current energy comprises operations arranged to promote at least one of the following criteria:

   - minimization of total distance between the energy supply units (1) and the consumers (3);
   - allocation according to the time of registration of each energy demand;
   - in case of current energy additions which are not sufficient to cover all current energy demands, applies an arbitration operation.

11. Method according to claim 10, wherein an arbitration operation is applied, said arbitration operation taking into account the following criteria:

   - a priority level ($P_k$) associated to each customer,
   - a delayable or non-delayable energy demand,
   - a distance or an electro-technical distance between the supply unit (1) and the consumer (3), or
   - an ordered combination of the above criteria.

12. Method according to any of the preceding claims, wherein the allocating of quantities of current energy comprises an arbitration operation (104), wherein, where a deficit of energy that meets the requirements of the customers (3) on the grid (5) exists, the allocating of quantities of current energy comprises operations arranged to allocate entirely the energy that meets the requirements of the customers (3) and to complete the allocating with energy that do not meet the requirements of the customers (3).

**13.** Method according to any of the preceding claims, wherein collecting energy demands comprises placing priorities on the energy demands, such as the energy demands can be ranked, the allocating quantities of current energy being made in function of said rank.

**14.** Method according to any of the preceding claims, further comprising an operation (110), wherein an energy supply summary is compiled and made available to each customer (3).

**15.** System comprising a managing unit (10), the managing unit (10) comprising a central server (11) and an energy ledger (7), the managing unit (10) being configured to implement the method according to one of the preceding claims.

**16.** A non-transitory computer-readable storage medium comprising a program product stored thereon and executable by a processor in the form of a software agent including at least one software module comprising instructions to implement a method according to one of claims 1 to 14.

**Patentansprüche**

**1.** Verfahren zum Verteilen von Energie an Lieferstellen eines Energieversorgungsnetzes (5), umfassend:

a) Sammeln von Energienachfragen jedes einer Mehrzahl von Verbrauchern (3), welche mit einem Energieversorgungsnetz (5) verbunden sind, wobei die Energienachfragen Anforderungsdaten umfassen,
b) Sammeln von Spezifikationsdaten des Ursprungs der Energie, welche von jeder einer Mehrzahl von Energieversorgungseinheiten (1) zugeführt wird, die mit dem Energieversorgungsnetz (5) verbunden sind,
c) auf den neuesten Stand bringen eines Energiebuchs (7) mit

- Mengen von Energie, welche von jedem Verbraucher (3) verbraucht wird,
- Mengen von Energie, welche von jeder Energieversorgungseinheit (1) zugeführt wird,
- den gesammelten Anforderungsdaten und
- den gesammelten Spezifikationsdaten,

d) Zuweisen von Mengen aktueller Energie, welche von den Energieversorgungseinheiten (1) zugeführt wird, an die Energienachfragen der Verbraucher (3) in Abhängigkeit des aktualisierten Energiebuchs (7),
e) Verteilen der Energie, welche von den Energieversorgungseinheiten (1) bereitgestellt wird, an die Verbraucher (3) durch das Energieversorgungsnetz (5) und gemäß den zugewiesenen Mengen,

**dadurch gekennzeichnet, dass** die Anforderungsdaten Parameter, welche eine Position an dem Netz (5) der Energieversorgungseinheiten (1) betreffen, oder geographische Parameter der Energieerzeugung enthalten.

**2.** Verfahren nach Anspruch 1, wobei die Anforderungsdaten wenigstens einen Parameter enthalten aus:

- Energieerzeugungsartparametern,
- geographischen Parametern der Energieerzeugung,
- Parametern einer Position an dem Netz (5) der Energieerzeugung,
- einem Parameter, welcher angibt, ob die Energieversorgungen verzögert werden können oder nicht,
- einem Preis, welchen der Benutzer gewillt ist, für die Energie zu bezahlen,
- einem spezifischen Energieversorger.

**3.** Verfahren nach einem der vorhergehenden Ansprüche, wobei die Anforderungsdaten ferner eine Beschreibung dafür enthalten, welche Verwendung von der Energienachfrage zu regulieren ist.

**4.** Verfahren nach einem der vorhergehenden Ansprüche, wobei die Anforderungsdaten Parameter enthalten, welche eine Position an dem Netz (5) der Energieversorgungseinheiten (1) betreffen, umfassend berechnete Metriken, welche durch Zählen einer Anzahl an Transformatoren an dem Teil des Netzes (5) etabliert werden, welcher eine Energieversorgungseinheit (1) und eine Lieferstelle des Verbrauchers (3) verknüpft.

**5.** Verfahren nach Anspruch 4, wobei jeder Transformator an dem Teil des Netzes (5), welcher eine Energieversorgungseinheit (1) und eine Lieferstelle des Verbrauchers (3) verknüpft, gemäß der Transformatorart oder -größe einem gewichteten Faktor zugeordnet wird, um die berechneten Metriken zu etablieren.

**6.** Verfahren nach einem der vorhergehenden Ansprüche, wobei das Sammeln von Spezifikationsdaten des Ursprungs der Energie, welche von jeder einer Mehrzahl von Energieversorgungseinheiten (1) zugeführt wird, die mit dem Energieversorgungsnetz (5) verbunden sind, über eine jeweilige Validierungsvorrichtung erfolgt, welche dazu eingerichtet ist, eine Menge an Energie zu zertifizieren, welche dem Netz (5) von der entsprechenden Energieversorgungseinheit (1) bereitgestellt wird.

**7.** Verfahren nach Anspruch 6, wobei jede Validierungsvorrichtung eine Messeinrichtung umfasst, welche dazu in der Lage ist, die Mengen elektrischer Energie zu messen, welche dem Netz (5) tatsächlich von jeder Versorgungseinheit (1) bereitgestellt wird, wobei die Validierungsvorrichtung dazu eingerichtet ist, eine Menge an Energie gemäß den von der Messeinrichtung gemessenen Mengen zu zertifizieren.

**8.** Verfahren nach Anspruch 7, wobei die Messeinrichtung ein Multi-Strom-/Multi-Eingangs-Messgerät ist, welches ermöglicht, verschiedene Ströme produzierter Energie zu zählen.

**9.** Verfahren nach einem der vorhergehenden Ansprüche, wobei das Zuweisen von Mengen aktueller Energie umfasst:

- Berechnen einer aktuellen Energienachfrage;
- Berechnen aktueller Energiezufuhren;
- Zuweisen der aktuellen Energiezufuhren an den Verbraucher (3) durch Vergleichen jeder Energienachfrage mit jeweiligen Spezifikationsdaten jeder Energieversorgungseinheit (1).

**10.** Verfahren nach einem der vorhergehenden Ansprüche, wobei das Zuweisen von Mengen aktueller Energie Vorgänge umfasst, welche dazu eingerichtet sind, wenigstens eines der folgenden Kriterien zu fördern:

- Minimierung einer Gesamtdistanz zwischen den Energieversorgungseinheiten (1) und den Verbrauchern (3);
- Zuweisung gemäß der Zeit einer Registrierung jeder Energienachfrage;
- in einem Fall aktueller Energiezufuhren, welche nicht ausreichend sind, um alle aktuellen Energienachfragen zu decken, Anwenden eines Entscheidungsvorgangs.

**11.** Verfahren nach Anspruch 10, wobei ein Entscheidungsvorgang angewendet wird, wobei der Entscheidungsvorgang die folgenden Kriterien berücksichtigt:

- ein Prioritätsniveau ($P_k$), welches jedem Verbraucher zugeordnet wird,
- eine verzögerbare oder nicht verzögerbare Energienachfrage,
- eine Distanz oder eine elektrotechnische Distanz zwischen der Versorgungseinheit (1) und dem Verbraucher (3) oder
- eine geordnete Kombination der vorstehenden Kriterien.

**12.** Verfahren nach einem der vorhergehenden Ansprüche, wobei das Zuweisen von Mengen aktueller Energie einen Entscheidungsvorgang (104) umfasst, wobei, wenn ein Defizit an Energie besteht, welche die Anforderungen der Verbraucher (3) an dem Netz (5) erfüllt, das Zuweisen non Mengen aktueller Energie Vorgänge umfasst, welche dazu eingerichtet sind, gänzlich die Energie zuzuweisen, welche die Anforderungen der Verbraucher (3) erfüllt, und das Zuweisen mit Energie zu vervollständigen, welche nicht die Anforderungen der Verbraucher (3) erfüllt.

**13.** Verfahren nach einem der vorhergehenden Ansprüche, wobei das Sammeln von Energienachfragen ein Platzieren von Prioritäten auf die Energienachfragen umfasst, so dass die Energienachfragen nach Rang geordnet werden können, wobei das Zuweisen von Mengen aktueller Energie in Abhängigkeit des Rangs ausgeführt wird.

**14.** Verfahren nach einem der vorhergehenden Ansprüche, ferner umfassend einen Vorgang (110), wobei eine Energieversorgungszusammenfassung zusammengestellt und jedem Verbraucher (3) zugänglich gemacht wird.

**15.** System, umfassend eine Verwaltungseinheit (10), wobei die Verwaltungseinheit (10) einen zentralen Server (11) und ein Energiebuch (7) umfasst, wobei die Verwaltungseinheit (10) dazu eingerichtet ist, das Verfahren nach einem der vorhergehenden Ansprüche zu implementieren.

**16.** Nichttransitorisches computerlesbares Speichermedium, welches ein darauf gespeichertes Programmprodukt umfasst und durch einen Prozessor in der Form eines Software-Agenten ausführbar ist, welcher wenigstens ein Softwaremodul umfasst, welches Anweisungen zum Implementieren eines Verfahrens nach einem der Ansprüche 1 bis 14 umfasst.

**Revendications**

1. Procédé pour distribuer de l'énergie à des points de fourniture d'un réseau d'approvisionnement en énergie (5), comprenant :

   a) la collecte de demandes d'énergie à partir de chacun d'une pluralité de consommateurs (3) connectés à un réseau d'approvisionnement en énergie (5), les demandes d'énergie incluant des données d'exigences,
   b) la collecte de données de spécification de l'origine de l'énergie fournie par chacune d'une pluralité d'unités d'approvisionnement en énergie (1) connectées audit réseau d'approvisionnement en énergie (5),
   c) le maintien à jour d'un registre d'énergie (7) avec

   - des quantités d'énergie consommées par chaque consommateur (3),
   - des quantités d'énergie fournies par chaque unité d'approvisionnement en énergie (1),
   - les données d'exigences collectées, et
   - les données de spécification collectées,

   d) l'attribution de quantités d'énergie courante fournie par des unités d'approvisionnement en énergie (1) aux demandes d'énergie des consommateurs (3) en fonction du registre d'énergie (7) mis à jour,
   e) la distribution de l'énergie fournie par les unités d'approvisionnement en énergie (1) aux consommateurs (3) par l'intermédiaire du réseau d'approvisionnement en énergie (5) et en fonction des quantités attribuées,

   **caractérisé en ce que** les données d'exigences contiennent des paramètres relatifs à une position sur le réseau (5) des unités d'approvisionnement en énergie (1) ou des paramètres géographiques de la génération d'énergie.

2. Procédé selon la revendication 1, dans lequel les données d'exigences contiennent au moins un paramètre parmi :

   - des paramètres de type de génération d'énergie,
   - des paramètres géographiques de la génération d'énergie,
   - des paramètres d'une position sur le réseau (5) de la génération d'énergie,
   - un paramètre indiquant si les approvisionnements en énergie peuvent être retardés ou non,
   - un prix que l'utilisateur est disposé à payer pour l'énergie,
   - un fournisseur d'énergie spécifique.

3. Procédé selon l'une quelconque des revendications précédentes, dans lequel les données d'exigences contiennent en outre une description de quelle utilisation doit être régie par la demande d'énergie.

4. Procédé selon l'une quelconque des revendications précédentes, dans lequel les données d'exigences contiennent des paramètres relatifs à une position sur le réseau (5) des unités d'approvisionnement en énergie (1) incluant une métrique calculée établie en comptant un nombre de transformateurs sur la partie du réseau (5) reliant une unité d'approvisionnement en énergie (1) et un point de fourniture du consommateur (3).

5. Procédé selon la revendication 4, dans lequel chaque transformateur sur la partie du réseau (5) reliant une unité d'approvisionnement en énergie (1) et un point de fourniture du consommateur (3) est associé à un facteur pondéré en fonction d'un type ou d'une taille de transformateur pour établir la métrique calculée.

6. Procédé selon l'une quelconque des revendications précédentes, dans lequel la collecte de données de spécification de l'origine de l'énergie fournie par chacune d'une pluralité d'unités d'approvisionnement en énergie (1) connectées audit réseau d'approvisionnement en énergie (5) est effectuée via un appareil de validation respectif agencé pour certifier une quantité d'énergie fournie par l'unité d'approvisionnement en énergie (1) correspondante au réseau (5).

7. Procédé selon la revendication 6, dans lequel chaque appareil de validation inclut un dispositif de mesure apte à mesurer les quantités d'énergie électrique effectivement fournies au réseau (5) par chaque unité d'approvisionnement (1), l'appareil de validation étant agencé pour certifier une quantité d'énergie en fonction des quantités mesurées par ledit dispositif de mesure.

**8.** Procédé selon la revendication 7, dans lequel le dispositif de mesure est un compteur de flux multiples et à entrées multiples permettant de compter différents flux d'énergie produite.

**9.** Procédé selon l'une quelconque des revendications précédentes, dans lequel l'attribution de quantités d'énergie courante comprend :

- le calcul d'une demande d'énergie courante ;
- le calcul d'un ajout d'énergie courante ;
- l'attribution des ajouts d'énergie courante à un consommateur (3) en comparant chaque demande d'énergie à chaque donnée de spécification de chaque unité d'approvisionnement en énergie (1).

**10.** Procédé selon l'une quelconque des revendications précédentes, dans lequel l'attribution de quantités d'énergie courante comprend des opérations agencées pour favoriser au moins un des critères suivants :

- une minimisation d'une distance totale entre les unités d'approvisionnement en énergie (1) et les consommateurs (3) ;
- une attribution en fonction de la date d'enregistrement de chaque demande d'énergie ;
- dans le cas d'ajouts d'énergie courante qui ne sont pas suffisants pour couvrir toutes les demandes d'énergie courante, l'application d'une opération d'arbitrage.

**11.** Procédé selon la revendication 10, dans lequel une opération d'arbitrage est appliquée, ladite opération d'arbitrage tenant compte des critères suivants :

- un niveau de priorité ($P_k$) associé à chaque consommateur,
- une demande d'énergie pouvant être retardée ou ne pouvant pas être retardée,
- une distance ou une distance électrotechnique entre l'unité d'approvisionnement (1) et le consommateur (3), ou
- une combinaison ordonnée des critères ci-dessus.

**12.** Procédé selon l'une quelconque des revendications précédentes, dans lequel l'attribution de quantités d'énergie courantes comprend une opération d'arbitrage (104), dans lequel, là où il existe un manque d'une énergie qui réponde aux exigences des consommateurs (3) sur le réseau (5), l'attribution de quantités d'énergie courante comprend des opérations agencées pour attribuer la totalité de l'énergie qui répond aux exigences des consommateurs (3) et pour compléter l'attribution avec de l'énergie qui ne répond pas aux exigences des consommateurs (3).

**13.** Procédé selon l'une quelconque des revendications précédentes, dans lequel la collecte de demandes d'énergie comprend la mise en place de priorités sur les demandes d'énergie, de manière que les demandes d'énergie puissent être classées, l'attribution de quantités d'énergie courante étant effectuée en fonction dudit classement.

**14.** Procédé selon l'une quelconque des revendications précédentes, comprenant en outre une opération (110), dans laquelle une synthèse d'approvisionnement en énergie est compilée et mise à disposition de chaque consommateur (3).

**15.** Système comprenant une unité de gestion (10), l'unité de gestion (10) comprenant un serveur central (11) et un registre d'énergie (7), l'unité de gestion (10) étant configurée pour mettre en œuvre le procédé selon l'une des revendications précédentes.

**16.** Support de stockage non transitoire lisible par ordinateur comprenant un produit de programme stocké dessus et exécutable par un processeur sous la forme d'un agent logiciel incluant au moins un module logiciel comprenant des instructions pour mettre en œuvre un procédé selon l'une des revendications 1 à 14.

# Fig. 1

# Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03023675 A
- US 20100217452 A
- US 20110231028 A